# EUROPEAN PATENT APPLICATION

(11) **EP 4 769 747 A1**
(43) Date of publication of application: **01.07.2026**
(21) Application number: 25857231.2
(22) Date of filing: 30.07.2025
(51) Int. Cl.: H01M 50/333, H01M 50/367, H01M 10/42, H01M 50/204, H01M 50/249

(54) **BATTERY PACK**

(30) Priority: 19.08.2024 KR 20240110786
(71) Applicant: LG Energy Solution, Ltd., Seoul 07335 (KR)
(72) Inventor: LEE, Jung-Hoon, Daejeon 34122 (KR); PARK, Min-Soo, Daejeon 34122 (KR); JUNG, Hye-Mi, Daejeon 34122 (KR)
(74) Representative: Plasseraud IP
(86) International application number: PCT/KR2025/011363
(87) International publication number: WO 2026/043145

(57) **Abstract**

Disclosed is a battery pack. The battery pack includes a base plate; a battery cell arranged on the base plate; a side wall installed on the base plate and having a venting hole positioned higher than the battery cell; and a venting device installed in the venting hole.

## Description

### TECHNICAL FIELD

The present disclosure relates to a battery pack.

The present application claims priority to Korean Patent Application No. 10-2024-0110786 filed on August 19, 2024 in the Republic of Korea, the disclosure of which is incorporated herein by reference.

### BACKGROUND ART

As the demand for portable electronic products such as smartphones, tablet PCs, and smart watches increases significantly and electric vehicles become increasingly widespread, research is being actively conducted on batteries installed in these vehicles, especially secondary batteries that allow repeated charging and discharging.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. At this time, each secondary battery included in one battery module may be referred to as a battery cell. In addition, multiple battery modules may be connected to each other to form a battery pack.

However, when a battery pack includes a plurality of battery modules and each battery module includes a plurality of battery cells, it may be vulnerable to a thermal chain reaction between battery modules or between battery cells. For example, when an event such as thermal runaway occurs within a single battery module, the thermal runaway must be suppressed from propagating to other battery modules or other battery cells. If the propagation of thermal runaway between battery modules or battery cells is not properly suppressed, an event occurring in a specific battery module or battery cell may cause a chain thermal reaction in other battery modules or other battery cells, potentially causing an explosion or fire or increasing its scale.

In particular, when an event such as thermal runaway occurs in a single battery module, gas or flame may be randomly discharged to the outside. If the discharge of gas or flame is not properly controlled, the gas or flame may be discharged toward other battery modules, potentially causing a thermal chain reaction in the other battery modules. In particular, a module terminal may be present at the front side of the battery module, and a component such as a module bus bar for electrical connection with other battery modules or battery packs may be present. Therefore, if flame is discharged to the front side of the battery module, the module terminals may be damaged and an electrical short may occur within the battery pack. In addition, since other battery modules may be present at the front side of the battery module, if flame is discharged to the front side of a specific battery module, the discharged flame may be directed to other battery modules, easily causing a fire to spread between battery modules.

If thermal transfer between battery modules or battery cells is not properly controlled, a sudden voltage drop may occur in the battery module or battery pack. This may lead to a sudden shutdown of the device in which the battery module or battery pack is mounted, resulting in unexpected damage. For example, if a voltage drop occurs suddenly in a battery pack while an electric vehicle is in operation, there is no time to move the vehicle to a safe location.

Furthermore, if thermal propagation between battery modules or cells is not properly controlled to cause a sudden fire or explosion, there is a high possibility of causing casualties to the users. For example, when thermal runaway occurs in an electric vehicle, if a certain amount of time is not allowed before a full-blown fire develops, occupants may not be able to safely escape.

### DISCLOSURE

### Technical Problem

Therefore, the present disclosure is designed to solve the problems of the related art, and therefore the present disclosure is directed to providing a battery pack with an improved structure to appropriately control the emission of flame, etc. generated inside a battery module, and a vehicle including the same.

In addition, the present disclosure is directed to providing a structure capable of rapidly discharging a venting gas when a thermal event occurs.

In addition, the present disclosure is directed to providing a structure capable of stably maintaining the opening and closing function of a venting device when a thermal event occurs.

In addition, the present disclosure is directed to providing a structure capable of securing a venting space when a thermal event occurs.

In addition, the present disclosure is directed to providing a structure capable of guiding the flow of a venting gas when a thermal event occurs.

However, the technical problems that the present disclosure seeks to solve are not limited to the problems described above, and other problems not mentioned herein will be clearly understood by those skilled in the art from the following description.

### Technical Solution

In one aspect of the present disclosure, there is provided a battery pack comprising: a base plate; a battery cell arranged on the base plate; a side wall installed on the base plate and having a venting hole positioned higher than the battery cell; and a venting device installed in the venting hole.

In addition, the side wall may include a first part coupled to the base plate; and a second part extending inward from the first part and having an inclination with respect to the base plate, and the venting hole may be disposed in the second part.

In addition, the battery pack may further comprise a pack cover coupled to the second part and configured to cover the battery cell.

In addition, an angle between the second part and the base plate may be 45 degrees or more.

In addition, the battery pack may further comprise a venting guide coupled to an outer surface of the second part and configured to cover the venting hole.

In addition, the venting guide may include a guide part configured to cover the venting hole in an inclined manner.

In addition, an angle formed by the inclined surface of the guide part and the second part may be 45 degrees or less.

In addition, the venting guide may have a discharge hole formed in a direction following the inclination of the second part.

In addition, the venting device may be positioned higher than the battery cell.

In addition, the battery pack may further comprise a module case installed on the base plate and configured to accommodate the battery cell, and at least one of the venting hole, the venting device, and the second part may be positioned higher than the module case.

In addition, the battery pack may further comprise a BMS installed on the base plate and electrically connected to the battery cell, and at least one of the venting hole, the venting device, and the second part may be positioned higher than the BMS.

In addition, the battery pack may further comprise a partition wall installed on the base plate, and at least one of the venting hole, the venting device, and the second part may be positioned higher than the partition wall.

In another aspect of the present disclosure, there is also provided a vehicle, comprising the battery pack according to the present disclosure.

### Advantageous Effects

According to at least one of the embodiments of the present disclosure, when gas or flame is generated inside the battery module, the discharge of the gas or flame may be appropriately controlled.

According to at least one of the embodiments of the present disclosure, when a thermal event occurs, the venting gas may be quickly discharged.

According to at least one of the embodiments of the present disclosure, when a thermal event occurs, the opening and closing function of the venting device may be stably maintained.

According to at least one of the embodiments of the present disclosure, a venting space may be secured when a thermal event occurs.

According to at least one of the embodiments of the present disclosure, when a thermal event occurs, the flow of a venting gas may be guided.

According to at least one of the embodiments of the present disclosure, the electrical safety of the battery pack may be improved.

According to at least one of the embodiments of the present disclosure, an explosion of a battery pack may be prevented when a thermal event occurs.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a battery pack according to an embodiment of the present disclosure.
FIG. 2 is an exploded view showing some components of the battery pack of FIG. 1.
FIG. 3 is an exploded view showing some components of the battery pack of FIG. 2.
FIG. 4 is an exploded view showing some components of the battery pack of FIG. 2.
FIG. 5 is an exploded view showing the venting device of FIG. 4.
FIG. 6 is a cross-sectional view taken along the cutting line E-E' of FIG. 4.
FIG. 7 is a drawing showing the battery module of FIG. 3.
FIG. 8 is an exploded view showing the battery module of FIG. 7.
FIG. 9 is a cross-sectional view taken along the cutting line A-A' of FIG. 1.
FIG. 10 is a drawing showing a modified embodiment of FIG. 9.
FIGS. 11 and 12 are diagrams showing the change in FIG. 9 when a thermal event occurs.
FIG. 13 is a drawing showing the discharge of a venting gas when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

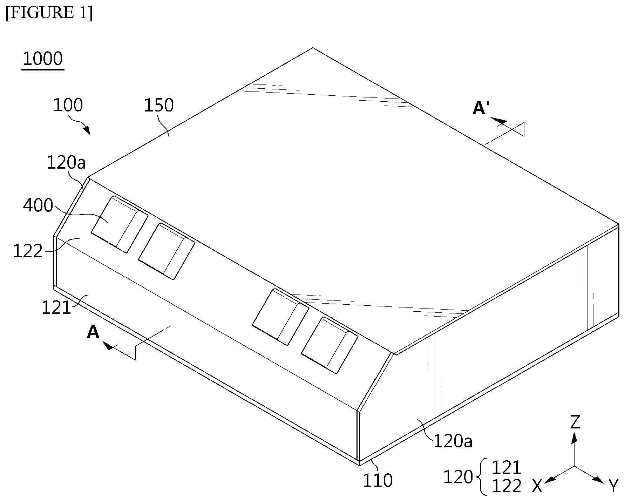

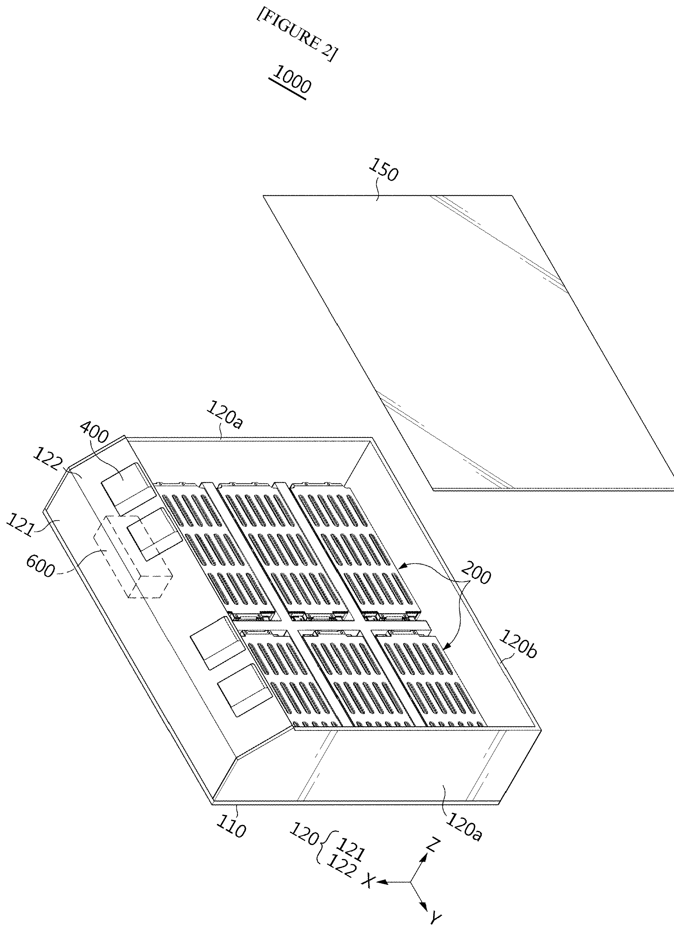

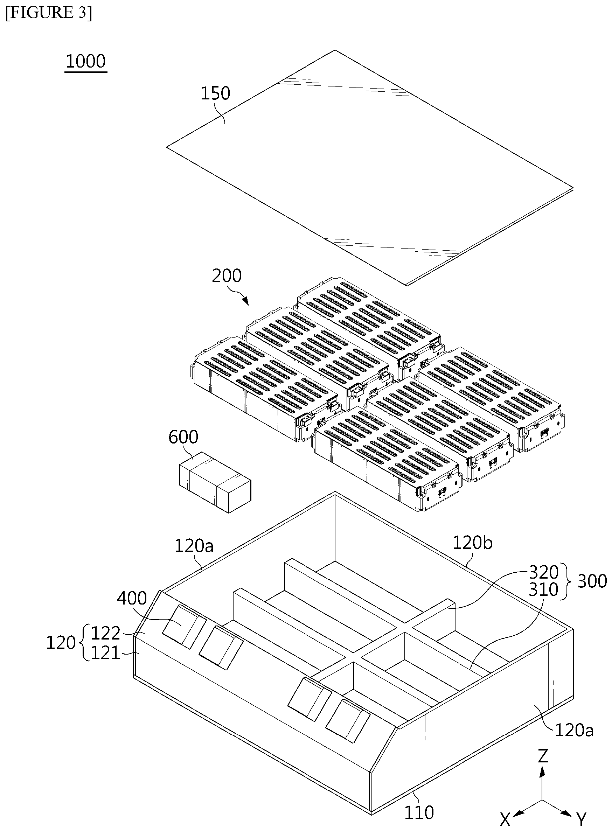

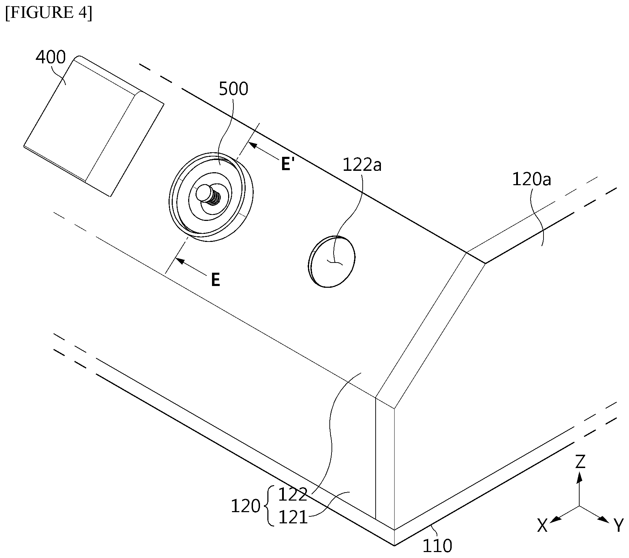

FIG. 1 is a diagram showing a battery pack 1000 according to an embodiment of the present disclosure. FIG. 2 is an exploded view showing some components of the battery pack 1000 of FIG. 1. FIG. 3 is an exploded view showing some components of the battery pack 1000 of FIG. 2. FIG. 4 is an exploded view showing some components of the battery pack 1000 of FIG. 2.

Referring to FIGS. 1 to 4, the battery pack 1000 according to an embodiment of the present disclosure may include a case 100. The case 100 may form an outer appearance of the battery pack 1000. The case 100 may have a rectangular parallelepiped shape. The case 100 may provide a space therein. The case 100 may include a base plate 110. The base plate 110 may have a square shape. The base plate 110 may have a flat plate shape. The base plate 110 may form an outer appearance of the battery pack 1000. The base plate 110 may provide an inner space of the battery pack 1000.

The battery cell 220 may be located inside the case 100. The battery cell 220 may be arranged on the base plate 110. The battery cell 220 may refer to a secondary battery. In particular, the battery cell 220 may be a pouch-type secondary battery. However, the shape of the battery cell 220 is not limited to a pouch shape, and the battery cell 220 may have various shapes such as a cylindrical shape or a rectangular parallelepiped shape. The battery cell 220 may be provided in plurality.

The case 100 may include a first side wall 120. The first side wall 120 may be installed, fastened, coupled, fixed, or attached to the upper surface of the base plate 110. The first side wall 120 may form the outer appearance of the battery pack 1000. The first side wall 120 may provide an inner space.

The first side wall 120 may have a venting hole 122a. The venting hole 122a may be positioned higher than the battery cell 220. The venting hole 122a may be provided in plurality.

The battery pack 1000 may include a venting device 500. The venting device 500 may be installed on the first side wall 120. The venting device 500 may be installed in the venting hole 122a. For example, the venting device 500 may be a gas valve. For example, the venting device 500 may be a vent plug 500a. The venting device 500 may open to discharge gas when the pressure inside the case 100 increases. In addition, the venting device 500 may block external air from flowing into the case 100. The venting device 500 may be provided in plurality. The plurality of venting devices 500 may be provided to correspond to the plurality of venting holes 122a in one-to-one relationship.

When a thermal event occurs, the high-temperature venting gas G discharged from the battery cell 220 may move upward. Since the venting hole 122a is positioned higher than the battery cell 220, the venting gas G may be discharged to the outside of the battery pack 1000 through the venting device 500 without being obstructed by the battery cell 220.

Referring to FIGS. 1 to 4, the first side wall 120 may include a first part 121. The first part 121 may be coupled to the base plate 110. The first part 121 may be fastened, coupled, attached, or fixed to the upper surface of the base plate 110. The first part 121 may extend in the vertical direction.

The first side wall 120 may include a second part 122. The second part 122 may extend inward from the first part 121. The second part 122 may have an inclination with respect to the base plate 110. The first part 121 and the second part 122 may be formed integrally. The second part 122 may be bent backward or in the -X-axis direction from the first part 121. The second part 122 may have an inclination with respect to the first part 121.

The venting hole 122a may be arranged in the second part 122. The venting device 500 may be installed in the second part 122.

When a thermal event occurs, the venting gas G and particles P may be discharged from the battery cell 220. The particles P may be a substance such as an electrode assembly or electrolyte inside the battery cell 220. The particles P may move together with the venting gas G. When the venting gas G is discharged through the venting device 500, the particles P may also be discharged through the venting device 500 or collide with the venting device 500. Since the second part 122 has an inclination with respect to the base plate 110, the particles P may not accumulate on the venting device 500 but may fall downward or in the -Z-axis direction by gravity. Since the particles P do not accumulate on the venting device 500, the venting hole 122a may be prevented from being clogged. Since the particles P do not accumulate on the venting device 500, the opening and closing function of the venting device 500 may be stably maintained.

Referring to FIGS. 1 to 4, the case 100 may include a second side wall 120a. The second side wall 120a may be installed, fastened, coupled, fixed, or attached to the upper surface of the base plate 110. The second side wall 120a may form the outer appearance of the battery pack 1000. The second side wall 120a may provide an inner space. The second side wall 120a may be provided as a pair. The second side wall 120a may be installed, fastened, coupled, fixed, or attached to the first side wall 120.

The battery pack 1000 may include a third side wall 120b. The third side wall 120b may be installed, fastened, coupled, fixed, or attached to the upper surface of the base plate 110. The third side wall 120b may form the outer appearance of the battery pack 1000. The third side wall 120b may provide an inner space. The third side wall 120b may be installed, fastened, coupled, fixed, or attached to the second side wall 120a.

Referring to FIGS. 1 to 4, the case 100 may include a pack cover 150. The pack cover 150 may have a square plate shape. The pack cover 150 may form the outer appearance of the battery pack 1000. The pack cover 150 may be installed, fastened, coupled, fixed, or attached to the first side wall 120. The pack cover 150 may be installed, fastened, coupled, fixed, or attached to the second part 122. The pack cover 150 may be installed, fastened, coupled, fixed, or attached to the second side wall 120a. The pack cover 150 may be installed, fastened, coupled, fixed, or attached to the third side wall 120b. The pack cover 150 may cover the inner space of the battery pack 1000. The pack cover 150 may be located on the battery cell 220.

Referring to FIGS. 1 to 4, the venting guide 400 may be installed, fastened, coupled, fixed or attached to the case 100. The venting guide 400 may be installed, fastened, coupled, fixed or attached to the first side wall 120. The venting guide 400 may be installed, fastened, coupled, fixed or attached to the second part 122. The venting guide 400 may cover the venting hole 122a. The venting guide 400 may cover the venting device 500. The venting guide 400 may guide the discharge direction of the venting gas G. The venting guide 400 may guide the discharge direction of the venting gas G downward or in the -Z-axis direction. The venting guide 400 may guide the discharge direction of the venting gas G so that the angle formed by the discharge direction of the venting gas G and the base plate 110 follows the angle formed by the second part 122 and the base plate 110.

If the battery pack 1000 is installed in a vehicle, the base plate 110 may be positioned so as to face the ground. At this time, the venting gas G may be discharged toward the ground through the venting guide 400. The venting gas G may flow away from the occupants. This may improve safety of the occupants.

Referring to FIGS. 1 to 4, the battery pack 1000 may include a partition wall 300. The partition wall 300 may include a first partition wall 310 and a second partition wall 320. The partition walls 300 may be provided in plurality. The partition wall 300 may be installed, fastened, fixed, coupled, or attached to the upper surface of the base plate 110. The partition wall 300 may partition the inner space of the battery pack 1000. The first partition wall 310 and the second partition wall 320 may have the same height.

The battery pack 1000 may include a BMS Battery Management System) 600. The BMS 600 may be installed, fastened, fixed, coupled, or attached to the upper surface of the base plate 110. The BMS 600 may be electrically connected to the battery cell 220 or the battery module 200. The BMS 600 may control the charging and discharging of the battery cell 220 or the battery module 200. The BMS 600 may monitor the state of the battery cell 220 or the battery module 200.

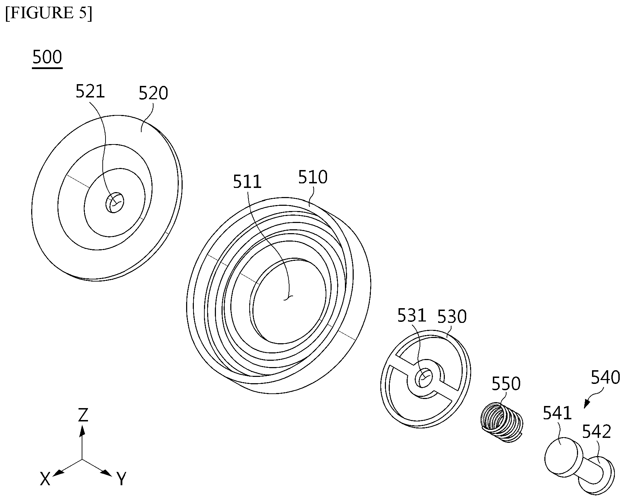

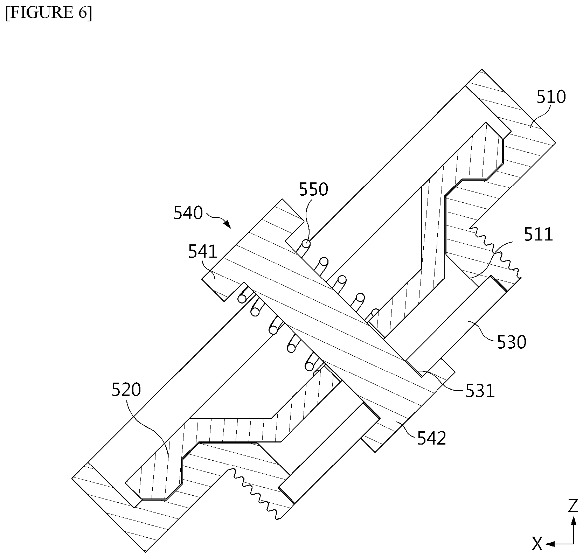

FIG. 5 is an exploded view showing the venting device 500 of FIG. 4. FIG. 6 is a cross-sectional view taken along the cutting line E-E' of FIG. 4.

Referring to FIGS. 5 and 6, the venting device 500 may include a mounting portion 510. The mounting portion 510 may be installed in the venting hole 122a. For example, the mounting portion 510 may have a screw thread on the outer peripheral surface, and the screw thread of the mounting portion 510 may be installed to engage with the screw thread of the venting hole 122a. A valve hole 511 may be formed in the mounting portion 510.

The venting device 500 may include a valve cover 520. The valve cover 520 may move toward or away from the venting hole 122a. The valve cover 520 may open or close the valve hole 511. The valve cover 520 may open the valve hole 511 as moving away from the venting hole 122a. Also, the valve cover 520 may close the valve hole 511 as moving toward the venting hole 122a.

The venting device 500 may include a spring 550. The spring 550 may provide a restoring force to the valve cover 520 in a direction in which the valve cover 520 approaches the venting hole 122a. The spring 550 may be compressed as the valve cover 520 moves away from the venting hole 122a. The spring 550 may be restored as the valve cover 520 moves toward the venting hole 122a.

The venting device 500 may include a support 530. The support 530 may be coupled to the inner side of the mounting portion 510. The support 530 may include a second coupling hole 531. The valve cover 520 may include a first coupling hole 521.

The venting device 500 may include a coupling bar 540. The coupling bar 540 may pass through the first coupling hole 521 and the second coupling hole 531. The coupling bar 540 may include a first stopper 541 at one side. The coupling bar 540 may include a second stopper 542 at the other side.

The spring 550 may be located between the first stopper 541 and the valve cover 520. The valve cover 520 and the support 530 may be located between the spring 550 and the second stopper 542.

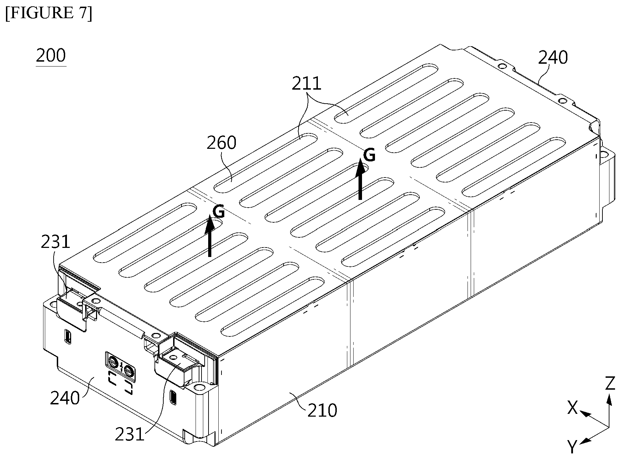

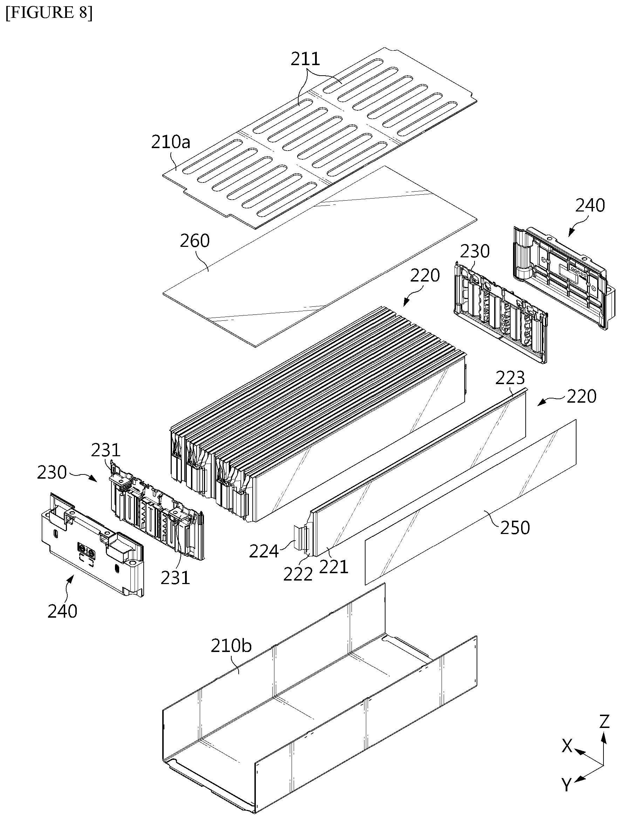

FIG. 7 is a drawing showing the battery module 200 of FIG. 3. FIG. 8 is an exploded view showing the battery module 200 of FIG. 7. Referring to FIGS. 7 and 8, the battery module 200 may be positioned inside the case 100. The battery module 200 may have a top plate 210a facing the pack cover 150. The battery module 200 may have a rectangular parallelepiped shape. The battery module 200 may be positioned in the space partitioned by the partition wall 300.

The battery module 200 may include a module case 210. The module case 210 may also be referred to as a frame 210. The module case 210 may include a top plate 210a and a lower frame 210b. The module case 210 may provide a space therein. The lower frame 210b may include a bottom plate and a pair of side plates. The top plate 210a may be installed, fastened, coupled, fixed, or attached to the pair of side plates. For example, the top plate 210a may be coupled to the lower frame 210b by welding. The module case 210 may have an open shape at the left and right sides. The top plate 210a may include a top hole 211. The top hole 211 may communicate the inside of the module case 210 and the outside. If a thermal event occurs from the battery module 200, the venting gas G and ignitable particles P may be discharged to the outside of the module case 210 through the top hole 211.

The battery module 200 may include a battery cell 220. The battery cell 220 may be accommodated inside the module case 210. The plurality of battery cells 220 may be stacked along the front and rear direction or the X-axis direction. The battery cell 220 may include an accommodation portion 221 having an electrode assembly, a first sealing portion 222 protruding to the left and right sides of the accommodation portion 221, and a second sealing portion 223 protruding upward from the accommodation portion 221. In addition, the battery cell 220 may include an electrode lead 224 protruding to the left and right sides of the first sealing portion 222, respectively. Each battery cell 220 may extend along the right and left direction or the Y-axis direction. The electrode lead 224 may protrude to the left and right sides of each accommodation portion 221.

The pad 250 may be disposed between the plurality of battery cells 220. The pad 250 may be arranged between at least some of the battery cells 220 and/or at the periphery of the stack. For example, the pad 250 may be configured to be arranged between every four stacked battery cells 220.

The pad 250 may contain an elastic material to enable swelling absorption of the battery cell 220. For example, the pad 250 may contain a foam material such as polyurethane. Alternatively, the pad 250 may contain a material capable of blocking heat or flame. For example, the pad 250 may contain with an insulating or fire-retardant material such as silicone or mica.

The bus bar frame assembly 230 may be provided at the left and right sides of the plurality of battery cells 220, respectively. The bus bar frame assembly 230 may be electrically connected to the electrode leads 224 of the plurality of battery cells 220. The bus bar frame assembly 230 may include an output terminal 231.

The pair of end covers 240 may be coupled to the left and right sides of the module case 210, respectively. The pair of end covers 240 may cover the left and right sides of the module case 210. The end covers 240 may have a square shape.

The inner cover 260 may be positioned between the top plate 210a and the plurality of battery cells 220. The inner cover 260 may be installed, fastened, fixed, coupled, or attached to the inner surface of the top plate 210a. The inner cover 260 may cover the top hole 211. When a thermal event occurs from the battery cell 220, the inner cover 260 may be ruptured by the venting gas G or ignitable particles P. The venting gas G may be discharged to the outside of the module case 210 through the top hole 211. The inner cover 260 may block the venting gas G generated from the outside of the battery module 200 from flowing into the module case 210.

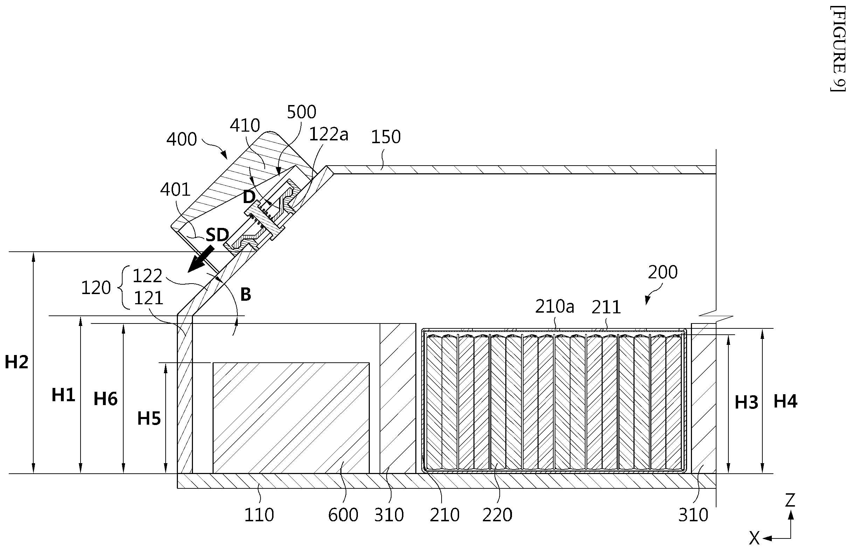

FIG. 9 is a cross-sectional view taken along the cutting line A-A' of FIG. 1. Referring to Fig. 9, the height H1 of the second part 122 may be greater than or equal to the height H3 of the battery cell 220. When a thermal event occurs, the high-temperature venting gas G discharged from the battery cell 220 may move upward. Since the second part 122 is positioned higher than the battery cell 220, the venting gas G may be discharged to the outside of the battery pack 1000 through the venting device 500 without being obstructed by the battery cell 220.

The height H1 of the second part 122 may be higher than the height H4 of the battery module 200. Since the second part 122 is positioned higher than the battery module 200, the venting gas G may be discharged to the outside of the battery pack 1000 through the venting device 500 without being obstructed by the battery module 200.

The height H1 of the second part 122 may be higher than the height H5 of the BMS 600. Since the second part 122 is positioned higher than the BMS 600, the venting gas G may be discharged to the outside of the battery pack 1000 through the venting device 500 without being obstructed by the BMS 600.

The height H1 of the second part 122 may be higher than or equal to the height H6 of the first partition wall 310. Since the second part 122 is positioned higher than the first partition wall 310, the venting gas G may be discharged to the outside of the battery pack 1000 through the venting device 500 without being obstructed by the first partition wall 310.

The height H2 of the venting hole 122a may be higher than or equal to the height H3 of the battery cell 220. Since the venting hole 122a is positioned higher than the battery cell 220, the venting gas G may be discharged to the outside of the battery pack 1000 through the venting device 500 without being obstructed by the battery cell 220.

The height H2 of the venting hole 122a may be higher than or equal to the height H4 of the battery module 200. Since the venting hole 122a is positioned higher than the battery module 200, the venting gas G may be discharged to the outside of the battery pack 1000 through the venting device 500 without being obstructed by the battery module 200.

The height H2 of the venting hole 122a may be higher than or equal to the height H5 of the BMS 600. Since the venting hole 122a is positioned higher than the BMS 600, the venting gas G may be discharged to the outside of the battery pack 1000 through the venting device 500 without being obstructed by the BMS 600.

The height H2 of the venting hole 122a may be higher than or equal to the height H6 of the first partition wall 310. Since the venting hole 122a is positioned higher than the first partition wall 310, the venting gas G may be discharged to the outside of the battery pack 1000 through the venting device 500 without being obstructed by the first partition wall 310.

The height H2 of the venting device 500 may be higher than or equal to the height H3 of the battery cell 220. Since the venting device 500 is positioned higher than the battery cell 220, the venting gas G may be discharged to the outside of the battery pack 1000 through the venting device 500 without being obstructed by the battery cell 220.

The height H2 of the venting device 500 may be higher than or equal to the height H4 of the battery module 200. Since the venting device 500 is positioned higher than the battery module 200, the venting gas G may be discharged to the outside of the battery pack 1000 through the venting device 500 without being obstructed by the battery module 200.

The height H2 of the venting device 500 may be higher than or equal to the height H5 of the BMS 600. Since the venting device 500 is positioned higher than the BMS 600, the venting gas G may be discharged to the outside of the battery pack 1000 through the venting device 500 without being obstructed by the BMS 600.

The height H2 of the venting device 500 may be higher than or equal to the height H6 of the first partition wall 310. Since the venting device 500 is positioned higher than the first partition wall 310, the venting gas G may be discharged to the outside of the battery pack 1000 through the venting device 500 without being obstructed by the first partition wall 310.

Referring to FIG. 9, the second part 122 and the base plate 110 may form an angle B. For example, the angle B may be 45 degrees or more. By forming the angle B between the second part 122 and the base plate 110, the particles P may not accumulate on the venting device 500 but may fall downward or in the -Z-axis direction by gravity. By preventing the particles P from accumulating on the venting device 500, the venting hole 122a may be prevented from being clogged. By preventing the particles P from accumulating on the venting device 500, the opening and closing function of the venting device 500 may be stably maintained.

Referring to FIG. 9, the venting guide 400 may have a discharge hole 401. The discharge hole 401 may be formed along the inclination direction SD of the second part 122. The venting gas G discharged through the discharge hole 401 may be discharged along the inclination direction SD. The angle formed between the venting gas G discharged through the discharge hole 401 and the base plate 110 may be the same as the angle between the second part 122 and the base plate 110.

If the battery pack 1000 is installed in a vehicle, the base plate 110 may be positioned toward the ground. At this time, the venting gas G may flow downward by being discharged in the inclination direction SD through the venting guide 400. The venting gas G may flow away from the occupants. This may improve safety of the occupants.

The venting guide 400 may include a guide part 410. The guide part 410 may cover the venting hole 122a in an inclined manner. The guide part 410 may cover the second part 122 in an inclined manner. The guide part 410 may guide the venting gas G to be discharged toward the discharge hole 401. Due to the guide part 410, the venting gas G may not flow back into the battery pack 1000.

The inclined surface of the guide part 410 and the venting hole 122a may form an angle D. The inclined surface of the guide part 410 and the second part 122 may form an angle D. For example, the angle D may be 45 degrees or less. If the angle D is formed to be greater than 45 degrees, the discharged venting gas G may flow into the battery pack 1000. By forming the angle D to be less than or equal to 45 degrees, the backflow of the venting gas G may be prevented.

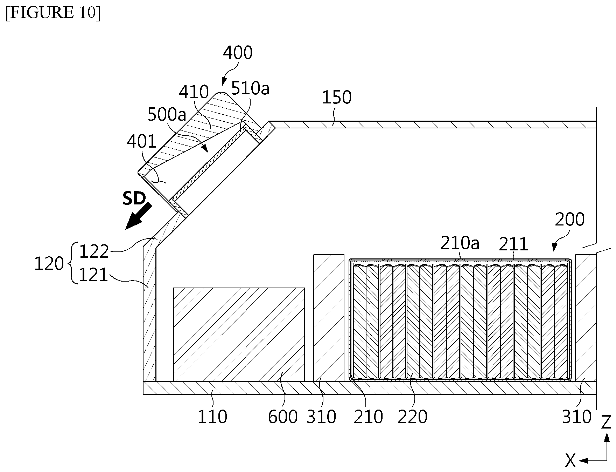

FIG. 10 is a drawing showing a modified embodiment of FIG. 9. Referring to FIG. 10, the venting device 500 may be a vent plug 500a. The venting device 500 may include a membrane 510a. If the inner pressure of the battery pack 1000 increases, the membrane 510a may rupture. If the membrane 510a ruptures, the venting hole 122a may open.

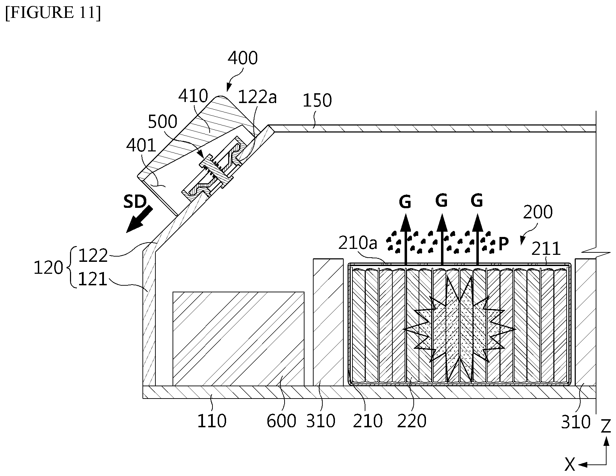

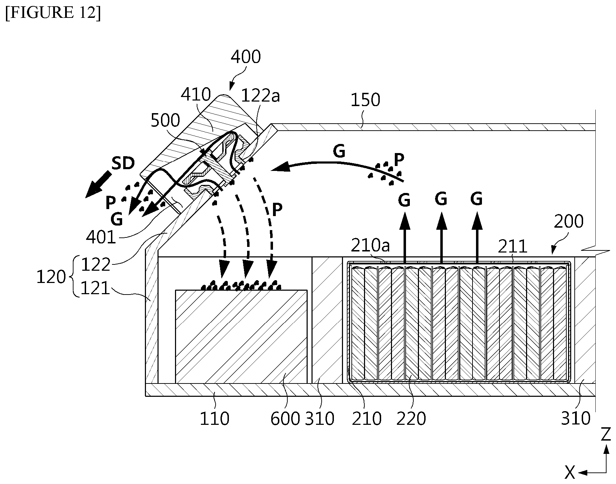

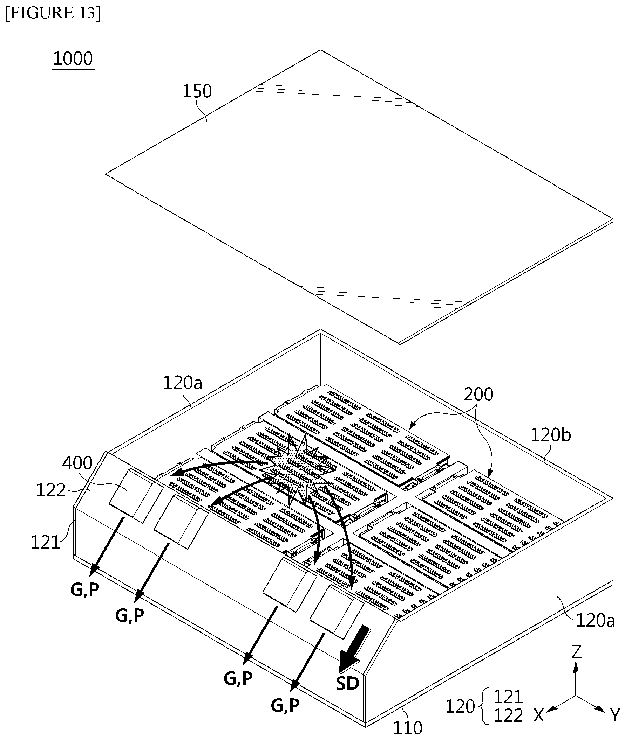

FIGS. 11 and 12 are diagrams showing the change in FIG. 9 when a thermal event occurs. FIG. 13 is a drawing showing the discharge of a venting gas G when a thermal event occurs. Referring to FIGS. 11 to 13, when a thermal event occurs, the venting gas G or particles P may be discharged from the battery module 200. As the inner pressure of the battery pack 1000 increases, the venting device 500 may be opened. If the venting device 500 is opened, a relatively low pressure may be formed around the venting hole 122a.

The venting gas G or particles P may flow toward the venting hole 122a. At this time, the venting gas G may be guided through the guide part 410 and discharged through the discharge hole 401. The venting gas G may be discharged along the inclination direction SD. The particles P may be discharged through the discharge hole 401. Also, some particles P may have reduced energy after colliding with the venting device 500 and may fall downward by gravity. Since the second part 122 has an inclination with respect to the base plate 110, the particles P may fall downward or in the -Z-axis direction by gravity without being accumulated on the venting device 500. Since the particles P do not accumulate on the venting device 500, the venting hole 122a may be prevented from being clogged. Since the particles P do not accumulate in the venting device 500, the opening and closing function of the venting device 500 may be stably maintained.

In addition, the battery pack 1000 according to the present disclosure may further include various components, for example components of the battery pack known at the time of filing of this application, such as a BMS, a bus bar, a relay, a current sensor, etc. in addition to the battery module 200.

The battery pack 1000 according to the present disclosure may be applied to a vehicle, such as an electric vehicle or a hybrid electric vehicle. That is, the vehicle according to the present disclosure may include the battery pack 1000 according to the present disclosure. Also, the vehicle according to the present disclosure may further include various other components included in the vehicle in addition to the battery pack 1000. For example, the vehicle according to the present disclosure may further include a body, a motor, a control device such as an ECU (electronic control unit), etc.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery pack comprising:
a base plate;
a battery cell arranged on the base plate;
a side wall installed on the base plate and having a venting hole positioned higher than the battery cell; and
a venting device installed in the venting hole.

2. The battery pack according to claim 1,
wherein the side wall includes:
a first part coupled to the base plate; and
a second part extending inward from the first part and having an inclination with respect to the base plate,
wherein the venting hole is disposed in the second part.

3. The battery pack according to claim 2, further comprising:
a pack cover coupled to the second part and configured to cover the battery cell.

4. The battery pack according to claim 2,
wherein an angle between the second part and the base plate is 45 degrees or more.

5. The battery pack according to claim 2, further comprising:
a venting guide coupled to an outer surface of the second part and configured to cover the venting hole.

6. The battery pack according to claim 5,
wherein the venting guide includes a guide part configured to cover the venting hole in an inclined manner.

7. The battery pack according to claim 6,
wherein an angle formed by the inclined surface of the guide part and the second part is 45 degrees or less.

8. The battery pack according to claim 5,
wherein the venting guide has a discharge hole formed in a direction following the inclination of the second part.

9. The battery pack according to claim 1,
wherein the venting device is positioned higher than the battery cell.

10. The battery pack according to claim 2, further comprising:
a module case installed on the base plate and configured to accommodate the battery cell,
wherein at least one of the venting hole, the venting device, and the second part is positioned higher than the module case.

11. The battery pack according to claim 2, further comprising:
a BMS installed on the base plate and electrically connected to the battery cell,
wherein at least one of the venting hole, the venting device, and the second part is positioned higher than the BMS.

12. The battery pack according to claim 2, further comprising:
a partition wall installed on the base plate,
wherein at least one of the venting hole, the venting device, and the second part is positioned higher than the partition wall.

13. A vehicle comprising the battery pack according to any one of claims 1 to 12.
